# EUROPÄISCHE PATENTANMELDUNG

(11) **EP 0 582 212 A1**
(43) Veröffentlichungstag der Anmeldung: **09.02.1994**
(21) Anmeldenummer: 93112119.8
(22) Anmeldetag: 29.07.1993
(51) Int. Cl.: H01G 9/20

(54) **Herstellung einer Anode für elektrochemische Zellen**

(30) Priorität: 03.08.1992 DE 4225575
(71) Anmelder: ABB PATENT GmbH, D-68309 Mannheim (DE)
(72) Erfinder: Flatz, Josef, Dr., D-69483 Waldmichelbach (DE); Grünling, Hermann Walter, Prof. Dr., D-69493 Hirschberg-Grossachsen (DE); Sopka, Jörg, Dr., D-68723 Schwetzingen (DE)
(74) Vertreter: Rupprecht, Klaus, Dipl.-Ing.

(57) **Zusammenfassung**

Die Erfindung betrifft Verfahren zur Herstellung einer Anode für eine elektrochemische Zelle, insbesondere Solarzelle, auf elektrisch leitfähigem Glas, auf welches eine Schicht aus porigem Metalloxid aufgebracht wird, die mit Metallkomplexen der Porphyrin-Phthalocyanin-Klasse und anderen Farbstoffen beaufschlagt wird und anschließend einer Wärmebehandlung unterzogen wird, wobei zunächst eine Paste aus hochdispersem Metalloxid, insbesondere Aluminiumoxid und/oder Titandioxid, unter Zugabe eines Farbstoffs und einer als Bindemittel wirksamen alkoholischen Lösung in trockener Atmosphäre hergestellt wird, die so erzeugte Paste als dünne Schicht auf die mit einer transparenten elektrisch leitenden Schicht belegten Glasplatte aufgetragen wird und die aus Glasplatte und der pastösen Metalloxidschicht bestehende Anordnung einer Wärmebehandlung bei Temperaturen unterhalb 300°C unterzogen wird.

## Beschreibung

Die Erfindung betrifft ein Verfahren zur Herstellung einer Anode für elektrochemische Zellen, insbesondere für Solarzellen, auf leitfähigem Glas, auf das eine Schicht aus Titandioxid aufgebracht wird, welche Schicht dann mit Metallkomplexen der Porphyrin-Phthalocyanin-Klasse und/oder anderen Farbstoffen getränkt wird und anschließend einer Wärmebehandlung unterzogen wird.

Aus der EP 03 33 641 A1 ist ein Verfahren zur Herstellung einer polykristalinen Metalloxid-Halbleiterschicht mit dem Sol-Gel-Verfahren für eine photoelektrochemische Zelle bekannt geworden, bei welchem ein Titansubstrat aus reinem Titan zuerst in kochender Salzsäure gereinigt wird. Auf dieses Substrat wird ein Tropfen einer mit sehr reinem Methanol verdünnten Titan-Ethoxid-Lösung gegeben, und danach wird das Titan-Alcoxid bei Raumtemperatur hydrolisiert. Anschließend wird das Substrat mit der hydrolysierten Schicht kurzzeitig auf ca. 450°C erhitzt. Dieser Prozeß wird mehrmals wiederholt. Nach 10- bis 15-maliger Wiederholung hat die Titandioxid-Schicht von etwa 20 µm erreicht. Nun wird das Substrat mit der Schicht bei etwa 500°C in einer Rein-Argonatmosphäre wärmebehandelt. Anschließend erfolgt das Aufbringen des Chromophors oder Farbstoffs durch Eintauchen des Substrats mit der Oxidschicht in eine wässrige Lösung des jeweiligen Farbstoffträgers für etwa 1 Stunde.

Zwangsläufig sind bei der Durchführung des bekannten Verfahrens die angegebenen zahlreichen Verfahrensparameter, wie Konzentration, Temperatur und Dauer exakt einzuhalten, um das gewünschte Resultat zu erzielen. Insbesondere ist nach dem bekannten Verfahren die Wärmebehandlung der Titandioxidschicht bei 450° bis 500°C notwendig, um die Titandioxidschicht zu verfestigen. Da aber bei Temperaturen oberhalb 300°C die notwendigen Farbstoffe zerstört werden, erfolgt nach dem bekannten Verfahren der Farbauftrag auf die Titandioxidschicht bei niederer Temperatur, vorzugsweise Raumtemperatur. Hierbei werden die Farbstoffmoleküle nur durch adsorptive Mechanismen an der Oberfläche der Titandioxidschicht gehalten.

Das bekannte Verfahren zur Herstellung photoelektochemischer Zellen, insbesondere für die Verwendung als Solarzellen, erfordert, wie aus dem erläuterten Verfahrensablauf ersichtlich ist. einen großen Aufwand. Insbesondere der hohe Zeitbedarf für die Zubereitung des Titansubstrats zur Bildung einer Titandioxidschicht macht das bekannte Verfahren für einen wirtschaftlichen Einsatz uninteressant, da die hierfür aufzuwendenden Kosten in keinem Verhältnis zum erzielbaren Ergebnis stehen.

Ausgehend vom vorstehend geschilderten Stand der Technik ist es daher Aufgabe der Erfindung, ein Verfahren zur Herstellung einer photoelektrochemischen Zelle, insbesondere Solarzelle, anzugeben, das im Vergleich zum Stand der Technik bei geringerem erforderlichen Aufwand bestmögliche Resultate zuläßt.

Diese Aufgabe wird erfindungsgemäß durch die kennzeichnenden Merkmale des Hauptanspruchs gelöst. Danach ist vorgesehen, daß in einem ersten Verfahrensschritt die Herstellung einer Paste aus hochdispersen Oxiden, einem Chromophor und einer als Bindemittel dienenden alkoholischen Lösung erfolgt. Bei der Pastenherstellung ist auf trockene Atmosphäre zu achten. In einem zweiten Verfahrensschritt wird die so hergestellte Paste auf eine mit einer elektrisch leitfähigen transparenten Schicht versehenen Glasplatte aufgetragen. In einem dritten Verfahrensschritt wird diese pastöse Schicht einer Wärmebehandlung unterzogen, bei welcher die Temperaturen 300°C nicht überschreiten. Die Wärmebehandlung sieht hierbei ein langsames Aufheizen unter Vakuum vor, um ungewünschte Reaktionen und Veränderungen zu vermeiden.

In bevorzugter Weiterbildung der Erfindung können als hochdisperses Oxid insbesondere Aluminiumoxid und/oder Titandioxid zur Anwendung gelangen. Als Chromophore oder Farbstoffe werden auch hier wie beim bekannten Verfahren Metallkomplexe der Porphyrin-Phthalocyanin-Klasse vorgesehen. Die als Bindemittel dienende Lösung wird vorzugsweise auf Basis von Metallalkoholaten und/oder Metallestern gemeinsam mit Lösungsmitteln verwendet.

Gemäß einer bevorzugten Ausführungsform des erfindungsgemäßen Verfahrens werden n Gramm hochdisperses TiO₂-Pulver mit n · 10⁻³ Gramm Phthalocyanin-Kobalt(II)-Komplex unter Zugabe von 7 ^{.} n Milliliter Lösung vermischt und homogenisiert, wobei dies vorzugsweise in einer Kugelmühle erfolgt. Die Lösung besteht aus zwei Teilen Aethylacetat und einem Teil Glycerin mit einem Zusatz von 0,1 bis 2% Titan(IV)ethylat bezogen auf die Menge TiO₂-Pulver. Die so hergestellte Paste wird anschließend im Siebdruckverfahren auf die Glasplatte in einer Stärke von 30 µm aufgetragen und anschließend ca. 1 Stunde bei 140°C einer Wärmebehandlung unterzogen. Die aus diesem Verfahren resultierende Schicht ist rißfrei, zeigt gute Haftung sowie gute physikalisch-chemische Aktivität als Anode.

Gemäß einer weiteren bevorzugten Ausführungsform des erfindungsgemäßen Verfahrens werden ebenfalls n Gramm Titandioxid-Pulver mit 0,5 n Milligramm Octaethyl-Porphin-Ruthenium(II) unter Zugabe von 6,5 n Milliliter Lösung vermischt und auf einem 3-Walzenstuhl homogenisiert. Die hier verwendete Lösung besteht aus zwei Teilen Aethylacetat, aus einem Teil Ethylenglycoldimethylether und aus einem Teil Glycerin mit einem Zusatz von 0,2 bis 3% Titanisopropylat bezogen auf die Menge des TiO₂-Pulvers. Auch diese Paste wird im Siebdruckverfahren auf die Glasplatte in gleicher Stärke von etwa 30 µm aufgetragen und anschließend bei ca. 130°C 1 Stunde lang einer Wärmebehandlung unterzogen.

In beiden beispielhaft erläuterten Ausführungen des erfindungsgemäßen Verfahrens erfolgt die Wärmebehandlung mit langsamen Aufheizen und Abkühlen.

## Patentansprüche

1. Herstellung einer Anode für eine elektrochemische Zellen, insbesondere Solarzelle, auf leitfähigem Glas, auf welches eine Schicht aus porigem Metalloxid aufgebracht wird, die mit Metallkomplexen der Porphyrin-Phthalocyanin-Klasse und/oder anderen Farbstoffen beaufschlagt wird und anschließend einer Wärmebehandlung unterzogen wird, gekennzeichnet durch die folgenden Verfahrensschritte
1. Herstellung einer Paste aus hochdispersen Metalloxid, insbesondere Aluminiumoxid und/oder Titanoxid, unter Zugabe eines Farbstoffs und einer als Bindemittel wirksamen alkoholischen Lösung in trockener Atmosphäre;
2. Auftragen der so erzeugten Paste als dünne Schicht auf die mit einer transparenten elektrisch leitenden Schicht belegten Glasplatte und
3. Wärmebehandlung der aus der elektrisch leitfähigen Glasplatte und der pastösen Metalloxidschicht bestehenden Anordnung bei Temperaturen unterhalb 300°C.

2. Herstellverfahren nach Anspruch 1, dadurch gekennzeichnet, daß n Gramm hochdisperses Titandioxid-Pulver mit n · 10⁻³ Gramm Phthalocyanin-Kobalt(II)-Komplex vermengt und unter Zugabe von 7 n Milliliter Aethylacetat-Glycerin-Lösung vermischt und homogenisiert werden, und daß die so erzeugte Mischung auf das leitfähige Glas aufgetragen und anschließend bei 140°C ausgehärtet wird.

3. Verfahren nach Anspruch 2, dadurch gekennzeichnet, daß die Homogenisierung der Mischung in einer Kugelmühle erfolgt.

4. Herstellverfahren nach Anspruch 1, dadurch gekennzeichnet, daß n Gramm Titandioxidpulver mit 0,5 n Milligramm Octaethyl-Porphin-Ruthenium(II) vermengt und unter Zugabe von 6,5 n Milliliter Aethylacetat-Ethylenglykoldimethylether-Glycerin-Lösung vermischt und homogenisiert wird, daß die homogenisierte Mischung auf das leitfähige Glas aufgetragen und anschließend bei 130°C wärmebehandelt wird.

5. Verfahren nach Anspruch 4, dadurch gekennzeichnet, daß die Homogenisierung der Mischung auf einem 3-Walzenstuhl erfolgt.

6. Verfahren nach einem der vorherigen Ansprüche, dadurch gekennzeichnet, daß das Auftragen der Mischung auf das leitfähige Glas mittels Siebdruckverfahren erfolgt.

7. Verfahren nach einem der vorherigen Ansprüche, dadurch gekennzeichnet, daß die Mischung in einer Schichtdicke von 30 µm auf das leitfähige Glas aufgetragen wird.

8. Verfahren nach Anspruch 2, dadurch gekennzeichnet, daß die Aethylacetat-Glycerin-Lösung aus zwei Teilen Aethylacetat und einem Teil Glycerin mit einem Zusatz von ≦ 2% Titan(IV)alkoholat bezogen auf die Menge Titandioxid-Pulver gebildet wird.

9. Verfahren nach Anspruch 4, dadurch gekennzeichnet, daß die Aethylacetat-Ethylenglykoldimethylether-Glycerin-Lösung im Verhältnis 2:1:1 gebildet wird mit einem Zusatz von ≦ 3% Titanisopropylat bezogen auf die Menge Titandioxidpulver.
